(19) Europäisches Patentamt
European Patent Office
Office européen des brevets

(11) EP 0 681 540 B1

(12) EUROPÄISCHE PATENTSCHRIFT

(45) Veröffentlichungstag und Bekanntmachung des Hinweises auf die Patenterteilung:
02.07.1997 Patentblatt 1997/27

(51) Int. Cl.⁶: B60V 1/14, G05D 16/20, F04D 27/00

(21) Anmeldenummer: 94906910.8

(22) Anmeldetag: 07.02.1994

(86) Internationale Anmeldenummer:
PCT/EP94/00336

(87) Internationale Veröffentlichungsnummer:
WO 94/18045 (18.08.1994 Gazette 1994/19)

(54) **OBERFLÄCHENEFFEKTFAHRZEUG**

HOVERCRAFT

AEROGLISSEUR

(84) Benannte Vertragsstaaten:
DE IT NL

(30) Priorität: 08.02.1993 DE 4303978
27.08.1993 DE 4329346

(43) Veröffentlichungstag der Anmeldung:
15.11.1995 Patentblatt 1995/46

(73) Patentinhaber: WITT & SOHN GMBH & CO.
D-25421 Pinneberg (DE)

(72) Erfinder:
• WITT, Hans
D-25421 Pinneberg (DE)
• WITT, Henrik
D-25421 Pinneberg (DE)
• WITT, Karsten, C.
D-22559 Hamburg (DE)

(74) Vertreter: Vonnemann, Gerhard, Dr.-Ing.
Dr. Vonnemann & Partner,
An der Alster 84
20099 Hamburg (DE)

(56) Entgegenhaltungen:
DE-A- 3 638 785        GB-A- 2 095 755
US-A- 3 889 775

• NAVY TECHNICAL DISCLOSURE BULLETIN,
Bd.5, Nr.5, Mai 1980 Seiten 51 - 54 ALLISON
'VARIABLE OUTPUT FAN'

**Beschreibung**

Die Erfindung betrifft ein Oberflächeneffektfahrzeug mit mindestens zwei Hubgebläsen zur Erzeugung eines Luftkissens, wobei jedes Gebläse einen Antrieb mit einem Motor und einem Regelkreis aufweist mit entsprechenden Sensoren und Stellgliedern zur Beeinflussung des Luftkissens. Außerdem betrifft die Erfindung ein Verfahren zum Regeln eines Luftkissens in einem Oberflächeneffektfahrzeug mit mindestens zwei Hubgebläsen, deren Antriebe Regler und Motore umfassen, die zur Erzeugung eines Luftkissens von bestimmtem Druck oder Höhe mit bestimmter Drehzahl betrieben werden und dabei eine entsprechende Leistung abgeben, wobei sich die Hubgebläse entsprechend einer bestimmten Kennlinie des Drucks in Abhängigkeit vom Volumenstrom verhalten.

Ein solches Oberflächeneffektfahrzeug ist beispielsweise aus der DE-A-3638 785 bekannt. Das dort beschriebene Wasserfahrzeug weist mehrere Hubgebläse zur Erzeugung eines Luftkissens auf, wobei jedes Gebläse einen Antrieb mit Motor und einen von einem Rechner geschlossenen Regelkreis mit Sensoren zur Beeinflussung des Luftkissens aufweist.

Durch entsprechende Programmierung kann die Steuerung je nach Optimierungsziel unterschiedliches Verhalten aufweisen. Wie jedoch genau die Antriebe zu regeln sind in Abhängigkeit des gewählten Optimierungskriteriums erläutert diese Schrift nicht.

Aus dem US-Patent 3,889,775 ist ein Luftkissenfahrzeug bekannt, dessen Gebläse einen Antrieb mit Motor und einen Regelkreis aufweist. Bei diesem Luftkissenfahrzeug wird ein gemessenes Signal der Vertikalbeschleunigung zurückgeführt. Außerdem wird noch die geometrische Lage zurückgeführt. Sie dient ebenfalls zur Verstellung der Gebläsekennlinie. Um die Gebläsekennlinie zu verändern, wird der Spalt zwischen den einzelnen Schaufeln des Gebläserades und der Seitenwand verstellt.

Dadurch kann zwar die Kennlinie des Ventilatordrucks in Abhängigkeit des Volumenstroms verändert werden. Sie weist aber weiterhin einen Scheitelpunkt auf, was nachteilige instabile Betriebszustände ermöglicht.

Mit den bekannten Regelungen von Hubgebläsen, insbesondere, wenn mehrere Hubgebläse parallel betrieben werden, sind die aus Druckschwankungen resultierenden Vertikalschwankungen nicht zu beseitigen. Beim parallelen Betrieb von Hubgebläsen kommt es nämlich zu ständigen Pendelungen, die zur Zerstörung der Hubgebläse und anderer Komponenten führen können.

Aufgabe der Erfindung ist es, ein Oberflächeneffektfahrzeug und ein Verfahren zum Betrieb von Hubgebläsen anzugeben, das einen wirtschaftlichen Betrieb und ein verbessertes Fahrverhalten des Fahrzeugs ermöglicht.

Diese Aufgabe wird erfindungsgemäß durch ein gattungsgemäßes Oberflächeneffektfahrzeug gelöst, bei dem jeder Antrieb einen zugeordneten Regelkreis aufweist, wobei der Antrieb eines ersten Hubgebläses als Leit- und die übrigen als Folgeantriebe geschaltet sind, indem den Regelkreisen der Folgeantriebe als Führungssignal eine gemessenes Leistungs- oder Volumenstromsignal des ersten Hubgebläses aufgeschaltet ist, und in den Regelkreis des Leitantriebs ein Höhen- oder Drucksignal des Luftkissens als Regelgröße zurückgeführt ist.

Dadurch werden die im Falle mehrerer parallel betriebener Hubgebläse beobachteten Pendelungen der Antriebe vermieden. Jedes zusätzliche Hubgebläse weist eigene Antriebe mit zugeordneten Regelkreisen auf, wobei der Antrieb des ersten Hubgebläses als Leit- und die übrigen als Folgeantriebe geschaltet sind. Die Regler sind dabei so geschaltet, daß eins oder mehrere der anderen Gebläse in Abhängigkeit der Leistung des Leitantriebes so geregelt wird, daß die Ventilatordrehzahl proportional der Wurzel aus der Differenz des Gesamtvolumenstromes sämtlicher parallel arbeitender Hubgebläse dividiert durch die Anzahl der parallel arbeitenden Hubgebläse abzüglich des Volumenstromes des geregelten Gebläses verstellt wird. Vereinfachend wird dabei der Volumenstrom gemessen und geregelt. Dies entspricht im wesentlichen einer Leistungsregelung, da das Produkt des Volumenstromes mit dem Druck des Luftkissen der Leistung entspricht.

Es ist vorgesehen, daß den Folgeantrieben als Führungssignal das gemessene Leistungs- oder Drehzahl- bzw. Volumenstromsignal des ersten Hubgebläses aufgeschaltet ist, wobei der Leitregelkreis vorzugsweise ein Druck- oder Lageregelkreis und die Folgeregelkreise Drehzahl- oder Leistungs- bzw. Volumstromregelkreise sind. Das Signal des Volumenstroms wird dabei vorzugsweise über einen gewissen Zeitraum gemittelt, was einer Filterung entspricht. Dabei wird vorzugsweise nicht direkt das gemessene Signal gefiltert, sondern das Ergebnis des nach einer Wurzelbildung erhaltenen Regelsignals.

Sehr kurzfristige Störungen, beispielsweise in Form einer einzelnen Welle, können ausgeregelt werden und den Fahrkomfort heben, wenn dem Antrieb ein weiterer Druckregelkreis zugeordnet ist, der eine Zeitkomponente aufweist, die kleiner als eine Zeitkonstante eines Folgeregelkreises ist.

Insbesondere in der Verbindung damit, daß das Hubgebläse aerodynamisch wirkende Elemente, insbesondere Schaufeln mit Servostellantrieben, aufweist, kann kurzzeitig die Ventilatorkennlinie so geändert werden, daß die Ventilatoren ohne nennenswerte Veränderung der Drehzahl durch Veränderung der Kennlinie kurzfristig mehr oder weniger Volumen fördern.

Auch die Maßnahme, daß das Hubgebläse einen im Normalbetrieb geschlossenen Umströmkanal aufweist, der die Druckseite mit der Saugseite verbindend ausgebildet ist, wobei der Kanal durch Verstellen einer Klappe automatisch zu öffnen ist, verändert die Kennlinie des Ventilators und läßt ohne großen baulichen Aufwand eine schnelle Reaktion auf äußere Störgrößen zu. Die Umströmklappen können beispielsweise durch eine vorgespannte Feder in ihre Schließlage gedrückt werden. Bei Überschreiten eines vorgegebenen Kissendruckes wird die Vorspannung überwunden und die Klappe öffnet; während sie bei fallendem Druck wieder schließt.

Besonders wirkungsvoll ist es, wenn der Ümströmkanal einen Verschlußmechanismus aufweist, dessen Antrieb als Stellglied in dem weiteren Druckregelkreis geschaltet ist. Besonders vorteilhaft ist, wenn das Quardrat der definierten Regelgröße zur Ansteuerung aerodynamisch wirkenede Elemente, wie beispielsweise Leitschaufeln oder Umzströmkanäle, genutzt wird.

In weiterer Ausgestaltung der Erfindung ist vorgesehen, daß eine Arbeitspunkterkennungseinrichtung vorgesehen ist, mit einer Auswertungseinrichtung zur Signalisierung eines instabilen Arbeitspunktes und einer automatischen Rückführung in einen stabilen Arbeitspunkt. Dadurch werden instabile Arbeitspunkte, die gleichzeitig auch unwirtschaftliche sind, vermieden. Es wurde nämlich beobachtet, daß teilweise über längere Zeiträume einzelne Hubgebläse rückwärts durchströmt werden und diese zusätzlichen Verluste von den übrigen Ventilatoren mit entsprechend hohem Volumenstrom ausgeglichen werden müssen. In solchen Fällen kann durch eine geeignet ausgebildete automatische Erkennung des Arbeitspunktes, die beispielsweise durch Quotientenbildung aus Volumenstrom und Drehzahl verwirklicht werden kann, ein instabil arbeitender Ventilator automatisch abgeschaltet werden. Der Betrieb ist dann erheblich günstiger. Für eine Abschaltung muß der Ventilator dann mit Rückflußverhinderern, z.B. Rückschlagklappen, ausgerüstet sein. Eine weitere Möglichkeit ist es, das Resultat der Arbeitspunktüberwachung zur Bildung eines Alarmsignals nutzen, daß der Fahrzeugführung zur Kenntnis gebracht wird, damit entsprechende Gegenmaßnahmen ergriffen werden können. Schließlich ist möglich, durch zwangsweises Erhöhen der Drehzahl, den Arbeitspunkt des betroffenen Ventilators wieder in einen stabilen Bereich zurückzuführen. Die mit der Rückströmung verbundenen Leistungsverluste, die aus dem Entweichen zuvor verdichteter Luft aus dem Luftkissen resultieren, werden somit vermieden. Ein weiterer Nachteil solcher unkontrollierter Druckschwenkungen im Luftkissen ist, daß sie zu unangenehmen Schiffsbewegungen führen, die die Einsatzmöglichkeiten des Fahrzeugs begrenzen. Die Hubgebläse werden erfindungsgemäß so geregelt, daß sie, von kurzfristigen Ausnahmen abgesehen, im stabilen Bereich der Kennlinie arbeiten. Wenn eins oder mehrere Hubgebläse in der Nähe des Scheitelpunktes der Kennlinie rücken, bedeutet dies, daß der Druck zu hoch ist. Dadurch wird ein Oberflächeneffektfahrzeug unnötig hoch herausgehoben. Bei herkömmlichen Fahrzeugen führt dies zu periodischem Abblasen der überschüssigen Luft, was von einem schnellen Absacken des Fahrzeugs gefolgt wird und den Fahrkomfort des Fahrzeugs wiederum nachteilig beeinflußt.

Ein besonders vorteilhaftes Betriebsverhalten ergibt sich, wenn im Druckregelkreis der Regler die Leistung- oder Drehzahl des Hubgebläses nach einer Regel beeinflussend ausgebildet ist, die eine Drehzahländerung ($\Delta n$) dem Betrag nach proportional zur Quadratwurzel aus dem Betrag der Soll-Ist-Abweichung des gemessenen Differenzdruckes zwischen Kissen ($\Delta p_{ist}$) und atmosphärischen Druck vom Soll-Differenzdruck ($\Delta p_{soll}$) vorsieht. Der Regler verstellt dabei vorzugsweise die Drehzahl oder die Leistung proportional der Wurzel des Differenzdruckes zwischen einem von der Brücke aus eingestellten Solldifferenzdruck und dem im Kissen gemessen Istdifferenzdruck nach der Formel

$$\frac{\Delta n}{n_{ist}} \approx +\sqrt{\frac{|\Delta P_{soll} - \Delta P_{ist}|}{\Delta P_{soll}}} \qquad \text{bei } \Delta P_{soll} > \Delta P_{ist}$$

$$\frac{\Delta n}{n_{ist}} \approx -\sqrt{\frac{|\Delta P_{soll} - \Delta P_{ist}|}{\Delta P_{soll}}} \qquad \text{bei } \Delta P_{soll} < \Delta P_{ist}$$

Weitere vorteilhafte Ausgestaltungen des Fahrzeugs sind in den Ansprüchen 7 bis 9 beschrieben.

Bei einem gattungsgemäßen Verfahren wird die Aufgabe auch dadurch gelöst, daß die jeweiligen Leistungen oder Drehzahlen der Hubgebläse geregelt werden, indem ein Regler als Leitregler führt und die übrigen Regler folgen, wobei vom führenden Leitregler als Regelgröße ein Höhen- oder Drucksignal des Luftkissens und von dem oder den folgenden Reglern als Führungsgröße ein Leistungs- oder Volumenstromsignal des Leitgebläses verwendet wird.

Dadurch, daß der führende Leitregler den Druck oder die Höhe regelt und die folgenden Regler die Leistung bzw. Drehzahl regeln, wobei als Führungsgröße die Leistung bzw. der Volumenstrom oder die Drehzahl des Leitgebläses verwendet wird, wird die Drehzahl der Satellitengebläse, dann so herauf- oder heruntergeregelt, daß alle Gebläse den gleichen Volumenstrom oder zumindest die gleiche Leistung aufweisen. Sie arbeiten dann annähernd alle im gleichen Betriebspunkt. Das erfindungsgemäße Regelsystem, bei dem nur ein Hubgebläse auf eine Solldrehzahl eingeregelt wird, während die anderen durch eine Folgeregelung auf Einhalten des gleichen Volumenstroms eingestellt werden, gewährleistet, daß alle Hubgebläse zu gleichen Teilen zur Erzeugung des Leckvolumenstromes im Luftkissen beitragen dieser wird in Abhängigkeit vom Beladungszustand sowie ggf. weiterer Parameter, wie Fahrzeuggeschwindigkeit, Seegangstärke etc. vorgegeben. Dadurch wird die Anpassung an den erforderlichen Kissendruck vereinfacht und eine zu starke gegenseitige Beeinflussung der Hubgebläse und ein gegenseitiges Pendeln vermieden. Keines der Gebläse wird deshalb längere Zeit negativ durchströmt. Auf diese Weise wird der Bereich des stationären Betriebsverhaltens der Hubgebläse zuverlässiger eingehalten und ein zufriedenstellender wirtschaftlicher Betrieb gesichert.

Wenn sie zur Erzeugung einer Rückströmung eine eigene Beeinflussung von Bypassklappen aufweisen, so kann zusätzlich in Abhängigkeit des Druckes die Hubgebläse durch Erzeugen einer Rückströmung beeinflußt werden.

Wenn ein oder mehrere Gebläse Rückstromverhinderer aufweisen, werden unerwünschte Rückströmungen verhindert, sobald automatisch oder manuell ein Gebläse abgeschaltet wird.

Weitere vorteilhafte Ausgestaltungen des Verfahrens sind in den Ansprüchen 12 bis 14 beschrieben.

Die Erfindung wird in einer Zeichnung anhand einer bevorzugten Ausführungsform näher erläutert, wobei in den verschiedenen Figuren der Zeichnung funktionsgleiche Teile mit denselben Bezugsziffern versehen sind. Die Figuren zeigen im einzelnen:

Fig. 1     das Ersatzschema des Luftkissens eines Oberflächeneffektfahrzeugs mit nur einem Hubgebläse und seiner langsamen Drehzahlregelung,

Fig. 2     die Kennlinie eines Hubgebläses,

Fig. 3     das Ersatzschema eines Oberflächeneffektfahrzeugs mit einem Leit- und einem Satellitenhubgebläse,

Fig. 4     ein Kennlinienfeld mehrerer parallel betriebener Hubgebläse im stationären Bereich,

Fig. 5     die Seitenansicht eines Hubgebläses mit teilweise aufgebrochenem Gehäuse und

Fig. 6     die Aufsicht auf ein Hubgebläse mit teilweise aufgebrochenem Gehäuse und

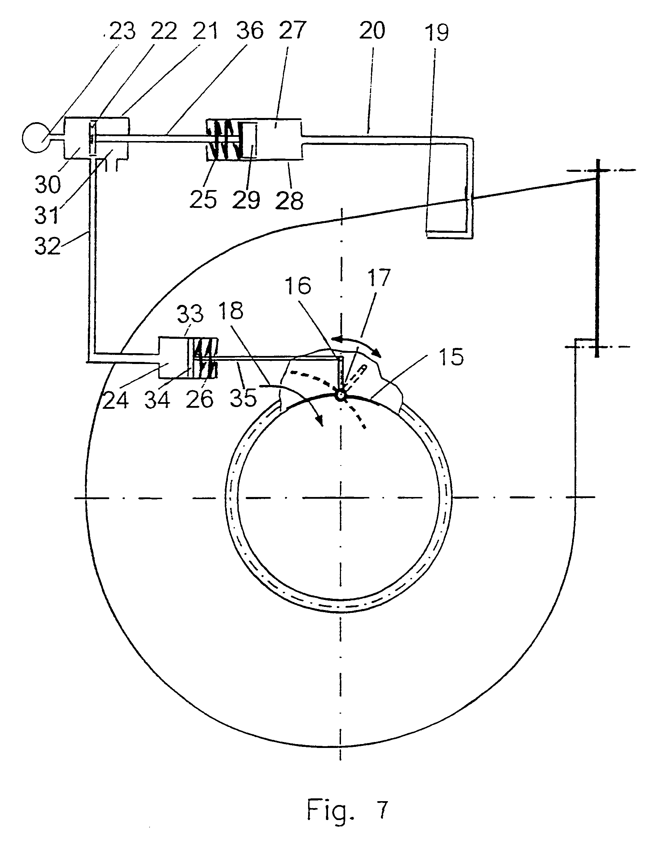

Fig. 7     eine pneumatische Regelung von Bypassklappen.

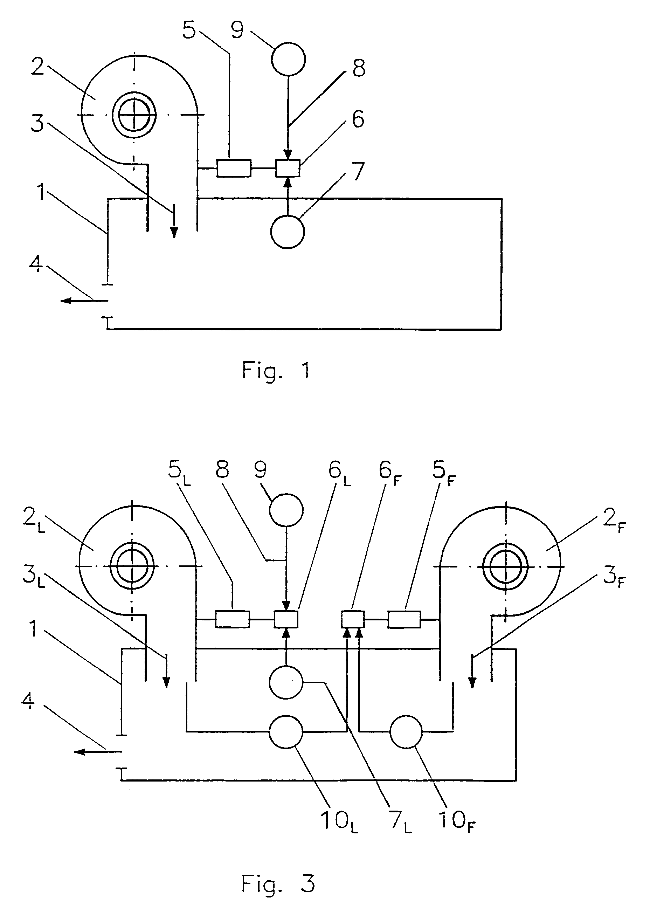

In Figur 1 bezeichnet das Rechteck schematisch die Systemgrenze eines Luftkissens 1. In Luftkissen 1 wird von Hubgebläse 2 ein bestimmter Volumenstrom 3 in Pfeilrichtung gefördert. Aus Luftkissen 1 entweicht ein als Pfeil dargestellter Leckvolumenstrom 4, der dem Speisevolumenstrom 3 langfristig die Waage hält. Kurzfristige Unterschiede zwischen dem Speisevolumenstrom 3 und Leckvolumenstrom 4 führen zu Änderungen des Luftkissens 1 mit seinen Zustandsgrößen Druckdifferenz $\Delta p$ und Volumen V. Volumenänderungen machen sich deshalb bei gleichbleibender Grundfläche des Luftkissens als Änderung der Luftkissenhöhe bemerkbar. Störgrößen, wie unterschiedliche Fahrgeschwindigkeit und Wellenhöhe machen sich durch einen veränderten Leckvolumenstrom 4 bemerkbar.

Als Meßgröße des Luftkissens wird die Kissendruckdifferent $\Delta p$ erfaßt und von Hubgebläse 2 vorzugsweise der Speisevolumenstrom 3. Das Produkt ergibt die aerodynamische Leistung des Hubgebläses.

Das Leitgebläse 2 wird von Motor 5 angetrieben, der von Regler 6 beeinflußt wird. Regler 6 ist das Signal eines Drucksensors 7 sowie über Leitung 8 das Signal eines Sollwertgebers 9, der auf der Fahrzeugbrücke installiert ist, aufgeschaltet.

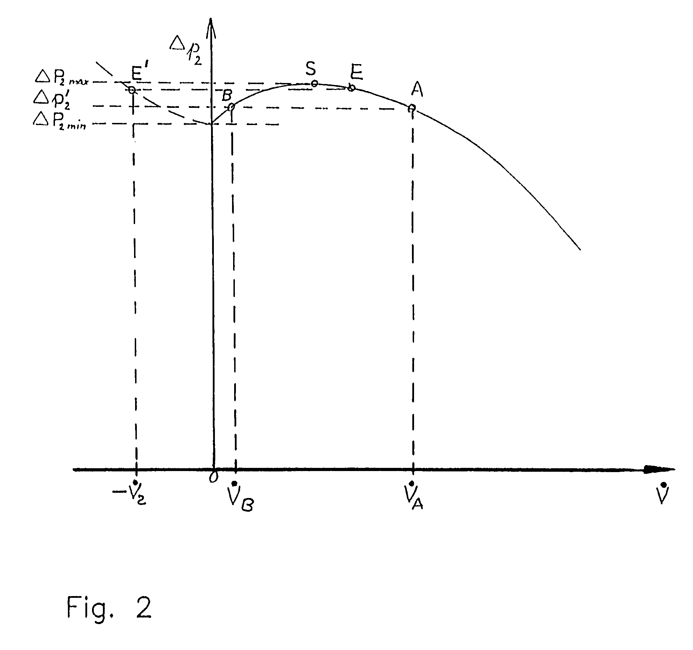

Eine typische Kennlinie für den als Hubgebläse eingesetzten Radialventilator ist in Figur 2 dargestellt. Die Kennlinie trifft auf eine bestimmte Drehzahl zu. Für jede Drehzahl gibt es den Austrittsdruckbereich $\Delta P_{2max}$ bis $\Delta P_{2min}$, der als Druck auf der Ordinate abgetragen ist. Hierbei bedeutet $\Delta$, daß es sich um einen Differenzdruck handelt. Die Kennlinie durchläuft in Richtung der Abszisse, bei einem speziellen Volumenstrom V einen Scheitelpunkt mit dem Druck $\Delta P_{2max}$. Für Drücke zwischen $\Delta P_{2min}$ und $\Delta P_{2max}$ ergeben sich somit jeweils zwei theoretische Arbeitspunkte A, B bei gleichem Druck $\Delta P_{2'}$, jedoch mit sehr unterschiedlichen Volumenströmen $V_A$ bzw. $V_B$. Ein problemloser Parallelbetrieb von zwei Ventilatoren mit der Kennlinie wäre ohne besondere Maßnahmen im Durckbereich $\Delta p_{2max}$ bis $\Delta p_{2min}$ nicht möglich. Hat sich zum Beispiels die Situation ergeben, daß ein Hubgebläse im Arbeitspunkt B arbeitet, so wird bei einem Ansteigen des Kissendrucks infolge äußerer Einflüsse, zum Beispiel Seegang das erste Hubgebläse auf der Kennlinie weiter nach links zu kleinerem Volumenstrom und größerem $\Delta P_2$ im neuen Arbeitspunkt bewegen. Ein zweites Hubgebläse B wird durch den steigenden Luftkissendruck zu kleinerem Volumenstrom gedrückt bis im Betriebspunkt E' sein Druck dem Luftkissendruck entspricht. Dabei kann das Fördervolumen, wie gezeigt, negativ werden, d.h. der Ventilator wird mit $-V_2$ rückwärts durchströmt, was als Überblasung bezeichnet wird.

Dieser Arbeitspunkt B sowie generell jeder links vom Scheitelpunkt ist unerwünscht, da es als Folge zu ständigen Pendelungen kommen kann, die zur Zerstörung der Hubgebläse und anderer Komponenten führen kann.

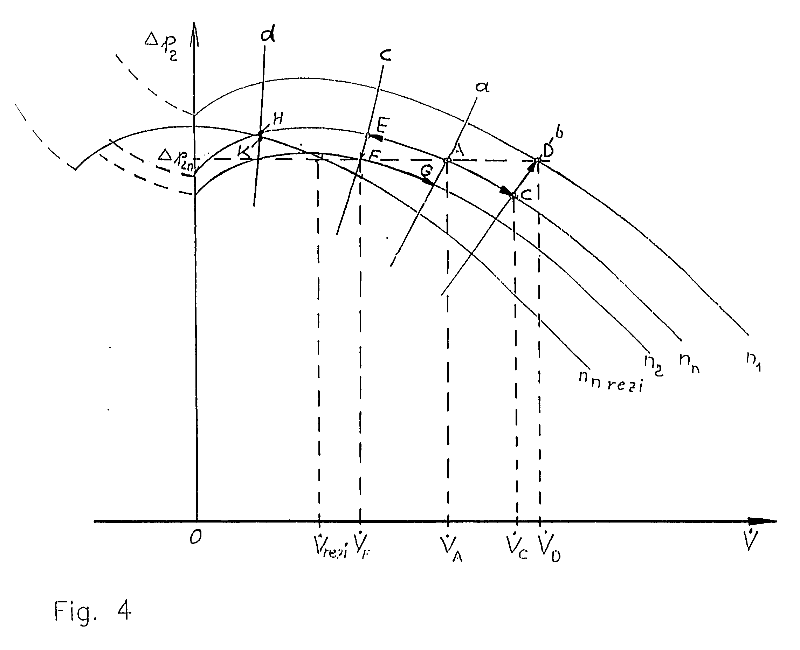

In Figur 3 ist ein erfindungsgemäßes Oberflächeneffektfahrzeug mit zwei parallel arbeitenden Hubgebläsen dargestellt. Zur Unterscheidung sind funktionsgleiche Teile beider Gebläse mit Indizes versehen, wobei das Gebläse mit Index "L" das Leitgebläse darstellt und das Gebläse mit den Index "F" das Folgegebläse ist. Auch das Folgegebläse weist einen Regler 6 und einen davon beeinflußten Motor 5 auf. Als Eingangsgröße ist dem Regler 6 das Meßsignal eines Volumenstromsensors 10 und das Signal eines Volumenstromsensors 10 aufgeschaltet, die die beiden Volumenströme der Hubgebläse erfassen.

Erfindungsgemäß ist eins der parallelen Gebläse als sogenanntes Leitgebläse geschaltet, das manuell von der Brücke aus mittels Geber 9 auf eine den gewünschten Druck entsprechenden Luftstrom oder Drehzahl eingestellt wird. Die Drehzahl wird auf den dafür notwendigen Wert durch einen Drehzahlregeler 5 hochgefahren. Diese Regelung ergibt bei einer Drucksenkung gegenüber dem vorgegebenen Wert eine Drehzahlerhöhung. Eine Druckerhöhung führt umgekehrt zu einer Drehzahlminderung. Die Regelung ist so gestaltet, daß die Drehzahl sich mit der Wurzel der Druckdifferenz ändert und asymtotisch eingestellt wird. Der Kissendruck wird von dem Drucksensor 7 gemessen. Das über eine einstellbare Zeit gemittelte Signal wird für den Vergleich mit dem Solldruck herangezogen. Das andere bzw. die anderen parallelen Kissengebläse weisen eine Drehzahlregelung auf, die als Eingangsgröße die Differenz der Volumenströme von Leitgebläse und eigenen Volumenstrom oder eventuell auch die Leistungsdifferenz verwendet. Diese Eingangsgrößen werden ständig meßtechnisch von den Volumenstromgebern $10_L$ und $10_F$ erfaßt. Die Drehzahl der folgenden Satelitengebläse wird dann herauf- oder heruntergeregelt, so daß alle Gebläse den gleichen Volumenstrom $3_F$ oder mindestens die gleiche Wellenleistung erbringen. Sie arbeiten dann annähernd alle am gleichen Betriebspunkt.

Es wird also nur ein Hubgebläse über den Kissendruck auf eine Solldrehzahl eingeregelt, während die anderen durch eine Folgeregelung auf Einhaltung des gleichen Volumenstroms eingestellt werden. Dadurch wird gewährleistet, daß alle Hubgebläse zu annäherend gleichen Teilen zur Erzeugung des Leckvolumenstromes 4 im Luftkissen 1 beitragen. Der Leckvolumenstrom wird in Abhängigkeit vom Beladungszustand sowie ggf. weiterer Parameter, wie Fahrzeuggeschwindigkeit, Seegangstärke etc. vorgegeben.

Zur Erläuterung des langsamen Regelsystems ist in Figur 4 das Kennlinienfeld für ein Hubgebläse bei unterschiedlichen Drehzahlen dargestellt. Im stationären Zustand arbeitet, wie in Figur 4 dargestellt, z.B. das Leitgebläse im Betriebspunkt A, dem Schnittpunkt der Kennlinie bei normaler Drehzahl $n_n$ mit der Widerstandskennlinie a des Luftkissens. Sinkt nun zum Beispiel bei Fahrt im Seegang der Kissendruck, weil infolge vergrößerten Leckvolumenstromes mehr Luft aus dem Luftkissen nach außen entweicht, stellt sich die Widerstandskennlinie b ein. Demzufolge wandert bei konstanter Drehzahl der Betriebspunkt des Leitgebläses A nach C, wobei der Volumenstrom $V_A$ auf $V_C$ steigt. Gleichzeitig fällt der Kissendruck, das Fahrzeug taucht tiefer ein. Durch die nun einsetzende Drehzahlregelung wird die Drehzahl auf $n_1$ erhöht, so daß im Punkt D der ursprünglich gewünschte Kissendruck wiederhergestellt wird. Der Volumenstrom steigt von $V_C$ auf $V_D$. Diese Erhöhung muß das Leitgebläse jedoch nicht allein bewältigen. Die Satellitenventilatoren folgen über die Lastverteilungssteuerung mit und übernehmen ihren Anteil an der erforderlichen Volumenstromerhöhung.

Kommt es dagegen zu einer Minderung des mittleren Leckvolumenstroms, z.B. entsprechend der Drosselkurve C, würde der Kissendruck steigen und sich der neue Arbeitsdruck E einstellen. Der Überdruck im Verhältnis zum vorgegebene Solldruck regelt jedoch die Drehzahl des Leitgebläses gefolgt von den Satelitengebläsen, herunter auf die neue Betriebsdrehzahl $n_2$ im Arbeitspunkt F. Die Regelzeitkonstanten sind fehlbar, so daß der mittlere Kissendruck möglichst konstant bleibt. Hierbei kann es zweckmäßig sein, daß die Zeitkonstante der Leitgebläseregelung größer ist als die der Satellitenregler, damit diese nur einen geringeren Nachlauf im Verhältnis zum Leitgebläse haben.

Schnelle, z.B. wellenfrequente Belastungsvariationen werden wegen der großen rotierenden Massen von Hubgebläse und Antriebsmotor kaum die Drehzahl beeinflussen. Da das Drehzahlreglungssystem durch einen Druckmittelwert über ein einstellbares Zeitintervall gesteuert wird, erhält es auch keine Steuerimpulse. Eine typische Zeitkonstante der Regelung liegt bei ca. 30 bis 60 Sekunden.

Sollte der Betriebspunkt unter dem Einfluß schneller Leckstromminderungen in den Bereich links des Scheitelpunktes der Kennlinie wandern wollen, ist ein weiterer regeltechnischer Eingriff vorgesehen. Dieser ist derart gestaltet, daß der ins Luftkissen geförderte Volumenstrom sehr schnell verringert wird, um ein Überschreiten des Scheitelpunktes zu verhindern.

Zu diesem Zweck ist erfindungsgemäß eine Bypassregelung vorgesehen, um das oder die Hubgebläse wieder in den Bereich rechts vom Scheitelpunkt der Kennlinie zurückzuführen. Die Bypassregelung hat dabei den Vorteil, daß keine zusätzlichen Abblasekanäle vorgesehen werden müssen, d.h. sie sind direkt in das Hubgebläse integriert. Durch die Bypassregelung erfolgt somit eine Veränderung der Kennlinie des Hubgebläses. Diese erfindungsgemäße Regelung ist wegen kurzer Wege und kleiner bewegter Massen schneller wirksam. Bei kleinem Volumenstrom wandert, wie in Figur 4 dargestellt, der Betriebspunkt bei ansteigendem Leckwiderstand von A über E nach F. Wenn die Widerstandslinie auf a zurückspringt, wandert der Betriebspunkt von F über G und langsam weiter nach A. In diesem Falle setzt die Bypassregelung nicht ein. Steigt jedoch der Leckwiderstand auf die Drosselkurve d stellt sich der neuen instabile Arbeitspunkt H ein. Bevor es so weit kommt, ehe die langsame Drehzahlregelung des Ventilators reagieren kann, soll die Bypassregelung eingreifen. Durch Rezirkulation eines Teiles der Luft, hier gezeichnet für einen Volumenstrom $V_{rezi}$, entsteht die neue Linie $n_{nrezi}$. Der Schnittpunkt mit der Drosselkurve d ergibt den Arbeitspunkt K, der sich kaum von H unterscheidet, jedoch stabil ist. Bei weiterem Widerstandanstieg wird der ventilator nicht überblasen.

Erfindungsgemäß ist vorgesehen, den Bypass so zu steuern, daß er sich oberhalb eines vorgegebenen Grenzdruckes öffnet. Die Steuerung kann dabei beispielsweise auf den Volumenstrom, den dynamischen Druck oder den Kissendruck reagieren.

Da der Druckausgleich im Luftkissen infolge der notwendigen Verschiebung von Luftmassen eine endliche Zeit beansprucht, ist es besonders vorteilhaft, die Druckabsenkung direkt am Hubgebläse vorzunehmen, um die Hubgebläse im stabilen Arbeitsbereich zu halten und negative Durchströmung zu verhindern.

Wenn die Bypassregelung häufig anspricht, was vorzugsweise mittels eines Zählgerätes erfaßt wird, wird erfindungsgemäß bei Überschreiten einer bestimmten Häufigkeit dies an die Brücke gemeldet. Die Ventilatoren fördern wesentlich mehr als notwendig ist. Entweder kann dadurch manuell oder auch bei einer bestimmten Häufigkeit ein oder mehrere Gebläse automatisch abgestellt werden, wobei die Einströmöffnung der Gebläse verschlossen wird. Zum Verschließen werden vorteilhafterweise Rückschlagklappen vorgesehen, da sie keine zusätzlichen Stellantriebe benötigen.

Beobachtungen an konventionellen Oberflächeneffektfahrzeugen zeigen, daß die Hubgebläse meistens für schwerste See mit hohen Leckvolumenstromverlusten ausgelegt werden. Zu einem großen Teil des Zeit werden sie aber bei gutem Wetter mit geringen Leckverlusten betrieben. Sie arbeiten dann notgedrungen in der Nähe des Scheitelpunktes mit häufigem Abrutschen in den Überströmungsbereich. Der Fahrkomfort verschlechtert sich und der Energieverbrauch ist höher als bei Betrieb einer kleineren Anzahl Ventilatoren. Durch ein Herunterregeln der Drehzahl wird nicht der gleiche Effekt erreicht, da der Kippunkt sich nur wenig verschiebt.

Bei schwerer See und damit stark variierenden Leckströmen kann es ein Vorteil sein, die Ventilatoren mit hoher Drehzahl zu fahren und die Bypassklappen ständig teilweise geöffnet zu halten. Bei fallendem Leckstrom und steigendem Druck fließt mehr Luft durch den Bypass zurück, wodurch das Schiff stabilisiert wird.

Anders sieht es aus, wenn der Druck im Luftkissen dann beim Austauschen des Fahrzeugs absinkt, da mehr Luft entweichen kann. Jetzt muß der ins Luftkissen beförderte Volumenstrom schnell erhöht werden, d.h. die Bypassregelung muß schnell wieder schließen.

Besondere Anforderungen an die Regelung von Hubgebläsen ergeben sich aus dem nicht mehr stationären Verhalten der Hubgebläse bei schnellen Änderungen im Luftkissen, wie sie bei Fahrt im Seegang auftreten. Die Kennlinie weist dann eine frequenzabhängige Hysterese auf.

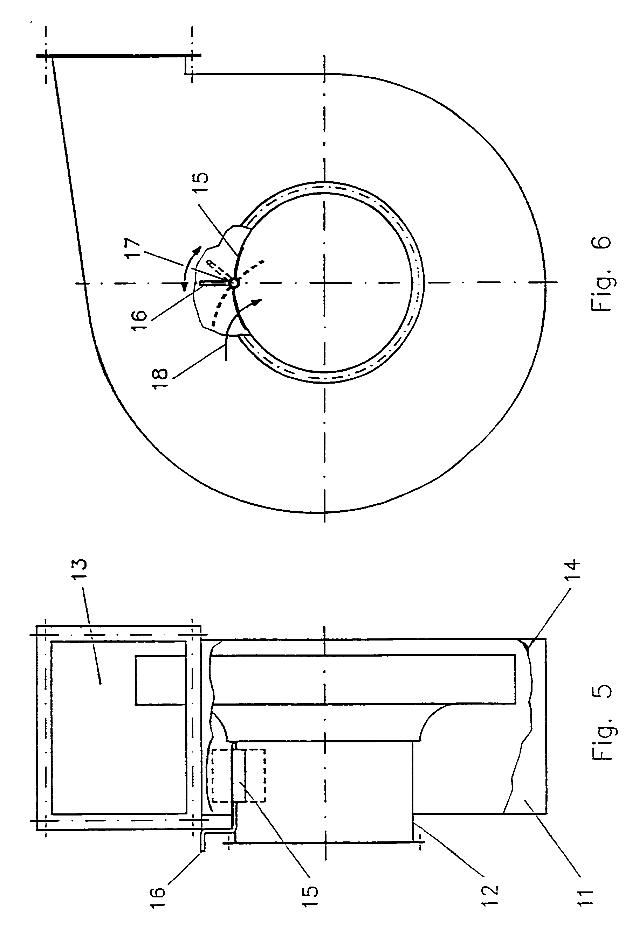

Figur 5 zeigt ein erfindungsgemäßes Gebläse mit Bypass zur Rezirkulation eines Teilvolumenstromes. Es besteht aus einem Gehäuse 11 mit einem axial ausgerichteten Ansaugstutzen 12 und einem tangential angeordneten Diffusor 13, durch den die Luft ausgestoßen wird. Ein Teil des Gehäusewandung ist entsprechend der Bruchlinie 14 nicht dargestellt, so daß der in das Gehäuse 11 hineinragende Teil des Ansaugstutzens 12 sichtbar ist. In diesem Teil ist eine Klappe 15 vorgesehen, die durch Verschwenken eines Betätigungshebels 16 um Achse 17 (Figur 6) geöffnet werden kann. In unterbrochener Linienführung ist die Klappe in ihrer geöffneten Lage dargestellt. In dieser Lage kann Luft aus dem Druckbereich des Gebläses entsprechend Pfeil 18 zurück in den Ansaugbereich des Ansaugstutzens 12 geführt werden.

Der Betätigungshebel 16 ist mit einem geeigneten Servoantrieb verbunden, der seinerseits von einem Regler entsprechend, wie vorbeschrieben, angesteueret wird.

Für geeignete Anwendungsfälle kann es ausreichen, die Klappe lediglich unter einer bestimmten Vorspannung geschlossen zu halten, so daß sie bei Überschreiten eines die Vorspannung überwindenden Druckes selbsttätig öffnet.

Auf diese Weise ist ein Oberflächeneffektfahrzeug geschaffen, das bei wirtschaftlicher Betriebsweise ein verbessertes Fahrverhalten aufweist.

**BEZUGSZEICHENLISTE**

| 1 | Luftkissen |
|---|---|
| 2 | Hubgebläse |
| 3 | Speisevolumenstrom |
| 4 | Leckvolumenstrom |
| 5 | Motor |
| 6 | Regler |
| 7 | Drucksensor |
| 8 | Leitung |
| 9 | Geber |
| 10 | Volumenstromsensor |
| 11 | Gehäuse |
| 12 | Ansaugstutzen |
| 13 | Diffusor |
| 14 | Bruchlinie |

| | |
|---|---|
| 15 | Klappe |
| 16 | Betätigungshebel |
| 17 | Achse |
| 18 | Pfeil |
| 19 | Meßort |
| 20 | Leitung |
| 21 | Steuerzylinder |
| 22 | Steuerkolben |
| 23 | Druckmittelquelle |
| 24 | Druckraum |
| 25 | Druckfeder |
| 26 | Druckfeder |
| 27 | Druckraum |
| 28 | Vorsteuerzylinder |
| 29 | Vorsteuerzylinder |
| 30 | Zylinderraum |
| 31 | Zylinderraum |
| 32 | Leitung |
| 33 | Stellglied |
| 34 | Kolben |
| 35 | Kolbenstange |
| 36 | Kolbenstange |
| V | Volumenstrom |
| p | Druck |
| v | Volumen |

Index

| | |
|---|---|
| L | Leitaggregat |
| F | Folgeaggregat |

**Patentansprüche**

1. Oberflächeneffektfahrzeug mit mindestens zwei Hubgebläsen (2L, 2F) zur Erzeugung eines Luftkissens (1), wobei jedes Gebläse einen Antrieb mit einem Motor (5L, 5F) und einem Regelkreis (6L, 6F) aufweist, mit entsprechenden Sensoren (7L, 10L, 10F) und Stellgliedern zur Beeinflussung des Luftkissens (1), **dadurch gekennzeichnet,** daß jeder Antrieb einen zugeordneten Regelkreis (6L, 6F) aufweist, wobei der Antrieb eines ersten Hubgebläses (2L) als Leitantrieb (5L, 6L) und der oder die übrigen als Folgeantrieb (5F, 6F) geschaltet sind, indem den Regelkreisen der Folgeantriebe (5F, 6F) als Führungssignal ein gemessenes Leistungs- oder Volumenstromsignal (10L) des ersten Hubgebläses (2L) aufgeschaltet ist und in den Regelkreis (6L) des Leitantriebs (5L, 6L) ein Höhen- oder Drucksignal (7L) des Luftkissens (1) als Regelgroße zurückgeführt ist.

2. Oberflächeneffektfahrzeug nach Anspruch 1, **dadurch gekennzeichnet,** daß dem dem Antrieb ein weiterer Druckregelkreis zugeordnet ist, der eine Zeitkonstante aufweist, die kleiner als eine Zeitkonstante eines Leit- oder Folgeregelkreises ist.

3. Oberflächeneffektfahrzeug nach einem oder mehreren der vorhergehenden Ansprüche, **dadurch gekennzeichnet,** daß das Hubgebläse aerodynamisch wirkende Elemente, insbesondere Schaufeln mit Servostellantrieben, aufweist.

4. Oberflächeneffektfahrzeug nach Anspruch 1, 2 oder 3, **dadurch gekennzeichnet,** daß das Hubgebläse einen im Normalbetrieb geschlossenen Umströmkanal aufweist, der die Druckseite mit der Saugseite verbindend ausgebildet ist, wobei der Kanal durch Verstellen einer Klappe automatisch zu öffnen ist.

5. Oberflächeneffektfahrzeug nach Anspruch 1, 2, 3 oder 4, **dadurch gekennzeichnet,** daß der Kanal einen Verschlußmechanismus aufweist, dessen Antrieb als Stellglied in dem weiteren Druckregelkreis geschaltet ist.

6. Oberflächeneffektfahrzeug nach einem der Ansprüche 1 bis 5, **dadurch gekennzeichnet,** daß eine Arbeitspunkterkennungseinrichtung vorgesehen ist, mit einer Auswertungseinrichtung zur Signalisierung eines instabilen Arbeitspunktes und einer automatischen Rückführung in einen stabilen Arbeitspunkt.

**7.** Oberflächeneffektfahrzeug nach einem der Ansprüche 1 bis 6, **dadurch gekennzeichnet,** daß das Hubgebläse vorzugsweise als Radialventilator mit axial angeordnetem(n) Ansaugrohr(en) und einem tangential angeordneten Diffusor in einem Gehäuse ausgebildet ist, wobei der Umströmkanal zwischen Ansaugrohr und Diffusor als trennende Klappe ausgebildet ist.

**8.** Oberflächeneffektfahrzeug nach Anspruch 1, 2, 3, 4, 5, 6 oder 7, **dadurch gekennzeichnet,** daß im Druckregelkreis der Regler die Leistung- oder Drehzahl des Hubgebläses nach einer Regel beeinflussend ausgebildet ist, die eine Drehzahländerung ($\Delta n$) dem Betrag nach proportional zur Quadratwurzel aus dem Betrag der Soll-Ist-Abweichung des gemessenen Differenzdruckes zwischen Kissen ($\Delta p_{ist}$) und atmosphärischen Druck vom Soll-Differenzdruck ($\Delta p_{soll}$) vorsieht.

**9.** Oberflächeneffektfahrzeug nach einem oder mehreren der vornergehenden Ansprüche, **dadurch gekennzeichnet**, daß das Fahrzeug ein Wasserfahrtzeug mit einem Katamaranrumpf ist.

**10.** Verfahren zum Regeln eines Luftkissens in einem Oberflächeneffektfahrzeug mit mindestens zwei Hubgebläsen (2L, 2F), deren Antriebe Regler (6L, 6F) und Motore (5L, 5F) umfassen, die zur Erzeugung eines Luftkissens (1) von bestimmtem Druck oder Höhe mit bestimmter Drehzahl betrieben werden und dabei eine entsprechende Leistung abgegeben, wobei sich die Hubgebläse (2L, 2F) entsprechend einer bestimmten Kennlinie des Drucks in Anhängigkeit vom Volumenstrom verhalten, **dadurch gekennzeichnet,** daß die jeweiligen Leistungen oder Drehzahlen der Hubgebläse (2L, 2F) geregelt werden, indem ein Regler (6L) als Leitregler führt und der oder die übrigen Regler (6F) folgen, wobei vom führenden Leitregler (6L) als Regelgröße ein Höhen- oder Drucksignal (7L) des Luftkissens (1) und von dem oder den folgenden Reglern (6F) als Führungsgröße ein Leistungs- oder Volumenstromsignal (10L) des Leitgebläses (2L) verwendet wird.

**11.** Verfahren nach Anspruch 10, **dadurch gekennzeichnet,** daß zusätzlich in Abhängigkeit des Druckes die Hubgebläse durch Erzeugen einer Rückströmung beeinflußt werden.

**12.** Verfahren nach Anspruch 10 oder 11, **dadurch gekennzeichnet,** daß der Arbeitspunkt der Hubgebläse überwacht wird und bei Erkennen eines instabilen Arbeitspunktes ein Alarmsignal erzeugt.

**13.** Verfahren nach einem der Ansprüche 10 bis 12, **dadurch gekennzeichnet,** daß die Häufigkeit von Rückströmereignissen erfaßt wird und die Regelung mit einer Hysterese erfolgt, die entsprechend der Häufigkeit festgestellter Rückströmeregnisse eingestellt wird.

**14.** Verfahren nach einem der Ansprüche 10 bis 13, **dadurch gekennzeichnet**, daß zusätzlicher Auftrieb durch ein oder mehrere im Wasser eintauchende Rümpfe erzeugt wird.

## Claims

**1.** Hovercraft with at least two lift fans (2L, 2F) for generating an air cushion (1) each fan having a drive with a motor (5L, 5F) and a control circuit (6L, 6F) with corresponding sensors (7L, 10L, 10F) and actuators for acting on the cushion (1) characterized in that each drive has an associated control circuit (6L, 6F) and the drive of a first lift fan (2L) is operated as a master drive (5L, 6L) while the rest of the lift fans are operated as slave drives (5F, 6F) in such a way that the control circuits of the slave drives (5F, 6F) as control input a measured output power signal or volume flow signal (10L) of the first lift fan (2L) is applied to and in the control circuit (6L) of the master drive (5L, 6L) a height or pressure signal (7L) of the air cushion (1) is fed back as a controlled condition.

**2.** Hovercraft according to claim 1, characterized in that an additional pressure control circuit is associated with the drive having a time constant smaller than a time constant of a master control circuit or slave control circuit.

**3.** Hovercraft according to one ore more of the preceding claims, characterized in that the lift fan has aerodynamically acting elements, in particular blades with servoactuators.

**4.** Hovercraft according to claim 1, 2, or 3, characterized in that the lift fan has a reversible flow-duct which is closed during normal operation connecting the pressure side with the suction side wherein the duct can be opened automatically by adjusting a flap.

5. Hovercraft according to claim 1, 2, 3, or 4, characterized in that the duct has a closing mechanism whose drive is circuitted as an actuator in the additional pressure control circuit.

6. Hovercraft according to one of the claims 1 to 5, characterized in that there is an operating point detection device with an evaluating device for signalling an unstable operating point and an automatic resetting to a stable operating point.

7. Hovercraft according to one of the claims 1 to 6, characterized in that the lift fan is preferably designed as a radial ventilator with axially arranged intake pipe(s) and a tangentially arranged diffusor in a housing, the reversible flow-duct being constructed as a dividing flap between the intake pipe and diffusor.

8. Hovercraft according to one of the claims 1 to 7, characterized in that the regulator in the pressure control circuit is designed so as to act upon the output power or speed of the lift fan based on a rule which provides for a change in speed ($\Delta n$) which is proportionally in terms of quantity to the square root of the reference-to-actual deviation of the measured differential pressure between the cushion ($\Delta p_{actual}$) and atmospheric pressure and the reference differential pressure ($\Delta p_{reference}$).

9. Hovercraft according to one or more of the preceding claims, characterized in that the vehicle is a water-vehicle with a catamaran hull.

10. Method for controlling an air cushion in a hovercraft with at least two lift fans (2L, 2F) whose drives have controllers (6L, 6F) and motors (5L, 5F) which are operated at a determined speed for generating an air cushion of a determined pressure or height and deliver a corresponding output power and the lift fans (2L, 2F) behave corresponding to a determined characteristic curve of the pressure depending on the volume flow, characterized in that the respective output power or speed of the lift fans (2L, 2F) are controlled in such a way that one controller (6L) serves as a master controller which is followed by the rest of the controllers (6F), whereby the guiding master controller is using as a controlled signal a height or pressure signal (7) of the air cushion (1) and the rest of the slave controllers (6F) are using an output power- or volume flow signal (10L) of the master fan as a reference signal.

11. Method according to claim 10, characterized in that the fans additionally to the dependency of the pressure are influenced by generating a reverse flow.

12. Method according to claim 10 and 11, characterized in that the operating point of the lift fans is monitored and an alarm signal is generated when an unstable operating point is detected.

13. Method according to one of the claims 10 to 12, characterized in that the frequency of reverse flow events is detected and regulation is effected with a hysteresis which is adjusted according to the frequency of the reverse flow events determined.

14. Method according to one of the claims 10 to 13, characterized in that additional buoyancy is produced by one or more hulls immersed in the water.

**Revendications**

1. Aéroglisseur équipé de deux soufflantes de levage (2L, 2F) produisant un coussin d'air (1), chaque soufflante comprenant un entraînement motorisé (5L, 5F), un circuit de régulation (6L, 6F) avec des détecteurs correspondants (7L, 10L, 10F) et des organes de réglage agissant sur le coussin d'air,
caractérisé en ce que
chaque entraînement possède un circuit de régulation associé (6L, 6F), l'entraînement de la première soufflante (2L) en tant qu'entraînement directeur (5L, 6L) étant connecté avec le ou les autres entraînements suiveurs (5F, 6F) dont les circuits de régulation des entraînements suiveurs reçoivent en tant que signal de guidage, un signal (10L) mesurant la puissance ou le débit volumique de la première soufflante de levage (24), tandis que le circuit de régulation (6L) de l'entraînement directeur (5L, 6L) reçoit en retour, en tant que grandeur de régulation, un signal (7L) de hauteur ou de pression du coussin d'air (1).

2. Aéroglisseur selon la revendication 1,
caractérisé en ce qu'
un second circuit de régulation de pression est associé à l'entraînement, ce circuit présentant une constante de temps inférieure à celle d'un circuit directeur ou d'un circuit suiveur.

**3.** Aéroglisseur selon une ou plusieurs des revendications précédentes,
caractérisé en ce que
la soufflante de levage comporte des éléments à effet aérodynamique, notamment des ailettes à servomécanismes de réglage.

**4.** Aéroglisseur selon les revendications 1, 2 ou 3,
caractérisé en ce que
la soufflante de levage présente, en fonctionnement normal, un canal aérodynamique fermé, constitué de manière à relier la face en pression à la face en dépression, ce canal pouvant s'ouvrir automatiquement par déplacement d'un clapet.

**5.** Aéroglisseur selon les revendications 1, 2, 3 ou 4,
caractérisé en ce que
le canal comporte un mécanisme de fermeture, dont l'entraînement est connecté en tant qu'organe de réglage dans le second circuit de régulation de pression.

**6.** Aéroglisseur selon une des revendications 1 à 5,
caractérisé en ce qu'
il est prévu un dispositif de détection d'un point de fonctionnement, avec un dispositif d'exploitation signalant un point de fonctionnement instable et un retour automatique à un point de fonctionnement stable.

**7.** Aéroglisseur selon une des revendications 1 à 6,
caractérisé en ce que
la soufflante de levage est constituée avantageusement à l'intérieur d'un boîtier en tant que ventilateur radial à tubulure radiale d'aspiration et diffuseur monté tangentiellement, le canal aérodynamique situé entre la tubulure d'aspiration et le diffuseur étant constitué par un clapet de séparation.

**8.** Aéroglisseur selon la revendication 1, 2, 3, 4, 5, 6 ou 7,
caractérisé en ce que
dans le circuit de régulation, le régulateur est du type agissant sur la puissance ou la vitesse de la soufflante de levage selon une certaine loi qui prévoit une modification ($\Delta$n) de la vitesse de rotation proportionnelle à la racine carrée de la valeur de l'écart entre la valeur réelle et la valeur de consigne de la différence de pression mesurée ($\Delta p_{réelle}$) entre le coussin et la pression atmosphérique de la différence de pression de consigne ($\Delta p_{soll}$).

**9.** Aéroglisseur selon une ou plusieurs des revendications précédentes,
caractérisé en ce que
le véhicule est un véhicule nautique de type catamaran.

**10.** Aéroglisseur de régulation d'un coussin d' air dans un aéroglisseur équipé de deux soufflantes de levage (2L, 2F) dont les entraînements comportent des régulateurs (6L, 6F) et des moteurs (5L, 5F) qui, pour obtenir un coussin d'air (1) de pression et de hauteur définies, fonctionnent à une vitesse déterminée en délivrant la puissance correspondante, les soufflantes (2L, 2F) opérant selon une caractéristique définie donnant la pression en fonction du débit volumique,
caractérisé en ce que
les puissances ou les vitesses de rotation des soufflantes de levage (2L, 2F) sont régulées, un régulateur (6L) intervenant comme régulateur directeur tandis que les autres régulateurs (6F) suivent le régulateur directeur (6L) qui utilise comme paramètre de regulation un signal (7L) donnant la hauteur ou la pression du coussin d'air (1), tandis que le ou les régulateurs suiveurs (6F) utilisent comme paramètre de guidage un signal (10L) donnant la puissance ou le débit volumique de la soufflante directrice (2L).

**11.** Procédé selon la revendication 10,
caractérisé en ce que
complémentairement, en fonction de la pression, les soufflantes sont influencées par la formation d'un courant de reflux.

**12.** Procédé selon la revendication 10 ou 11,
caractérisé en ce que
le point de fonctionnement de la soufflante est surveillé et un signal d'alarme est émis lorsqu'apparait un point de fonctionnement instable.

**13.** Procédé selon une des revendications 10 à 12,
caractérisé en ce que
la fréquence de l'apparition de courants de reflux est saisie et la régulation a lieu avec une hystérésis réglée en fonction de la fréquence des apparitions de courants de reflux constatée.

**14.** Procédé selon une des revendications 10 à 13,
caractérisé en ce que
la sustentation supplémentaire est assurée par l'immersion dans l'eau d'une ou plusieurs coques.

Fig. 1

Fig. 3

Fig. 2

Fig. 4

Fig. 6

Fig. 5

15

Fig. 7